# EUROPEAN PATENT APPLICATION

(11) **EP 2 626 243 A1**
(43) Date of publication of application: **14.08.2013**
(21) Application number: 13154500.6
(22) Date of filing: 08.02.2013
(51) Int. Cl.: B60Q 1/00

(54) **Vehicle lamp**

(30) Priority: 09.02.2012 JP 2012026209
(71) Applicant: Koito Manufacturing Co., Ltd., Tokyo 108-8711 (JP)
(72) Inventor: Hayakawa, Michihiko, SHIZUOKA-SHI, SHIZUOKA (JP)
(74) Representative: Intès, Didier Gérard André

(57) **Abstract**

There is provided a vehicle tamp (1). The vehicle comprises: a lamp housing (2) having an opening portion (2a); a translucent cover (3) covering the opening portion, wherein a lamp chamber (S) is formed by the lamp housing and the translucent cover; a lamp unit (4, 5) disposed within the lamp chamber and configured to emit light forward; a camera unit (9) whose light entry surface (9a) faces the translucent cover; and a partition member (6) configured to partition the lamp chamber and disposed between the translucent cover and the lamp unit to expose a light exit surface of the lamp unit to a first space (Sf), wherein the first space is a space surrounded by the partition member and the translucent cover. The partition member comprises a partition portion (11) configured to partition a second region (Sc) from portions of the first region (Sf) other than the second region (Sc), wherein the second region is a region formed between the light entry surface (9a) and translucent cover (3).

## Description

### Technical Field

The present invention relates to a vehicle lamp with a built-in imaging unit such as a camera.

### Background Art

As this type of vehicle lamp, it is known that a front imaging camera is attached to an upper portion of a lamp unit within a vehicle lamp, for example, as disclosed in JP-A-2008-105518.

However, the configuration disclosed in JP-A-2008-105518 has a problem in that light, which is emitted from the lamp unit and reflected from an inner surface of a lamp cover, tends to be incident upon the camera, and thus this reflected light affects imaging performance of the camera.

### SUMMARY OF THE INVENTION

An object of the present invention is to achieve reliable imaging performance of a camera by reducing an influence of reflected light by an inner surface of a lamp cover.

According to a first aspect of the present invention, there is provided a vehicle lamp. The vehicle lamp comprises: a lamp housing having an opening portion ; a translucent cover covering the opening portion, wherein a lamp chamber is formed by the lamp housing and the translucent cover; a lamp unit disposed within the lamp chamber and configured to emit light forward; a camera unit whose light entry surface faces the translucent cover; and a partition member configured to partition the lamp chamber and disposed between the translucent cover and the lamp unit to expose a light exit surface of the lamp unit to a first space , wherein the first space is a space surrounded by the partition member and the translucent cover. The partition member comprises a partition portion configured to partition a second region from portions of the first region other than the second region , wherein the second region is a region formed between the light entry surface and translucent cover.

According to a second aspect of the present invention, the partition portion is configured to surround the light entry surface and protrude toward the translucent cover.

According to a third aspect of the present invention, a clearance between the partition portion and the translucent cover is the smallest among clearances between the partition member and the translucent cover.

According to a fourth aspect of the present invention, a reflectivity reducing process for reducing reflectivity of light is performed on a surface of the partition member which is located between the light entry surface, and the partition member.

According to a fifth aspect of the present invention, a defogging process is performed on a portion of the translucent cover, which faces the region between the light entry surface and the translucent cover.

According to a sixth aspect of the present invention, there is provided a vehicle lamp. The vehicle lamp comprises: a lamp housing having an opening portion ; a translucent cover covering the opening portion, wherein a lamp chamber is formed by the lamp housing and the translucent cover; a lamp unit disposed within the lamp chamber and configured to emit light forward; a camera unit whose light entry surface faces the translucent cover; and a partition member configured to partition the lamp chamber and disposed between the translucent cover and the lamp unit to expose a light exit surface of the lamp unit to a first space, wherein the first space is a space surrounded by the partition member and the translucent cover; and a reflected light reducing portion configured to prevent light reflected by the partition member and the translucent cover from entering the light entry surface of the camera unit.

### BRIEF DESCRIPTION OF THE DRAWINGS

Fig. 1 is a perspective view illustrating an external appearance of a vehicle lamp according to an embodiment of the present invention;
Fig. 2 is a plane cross-sectional view schematically illustrating an inner configuration of the vehicle lamp illustrated in Fig. 1;
Fig. 3 is an enlarged perspective view illustrating a periphery of an light entry surface of a camera of the vehicle lamp illustrated in Fig. 1;
Fig. 4 is a plane cross-sectional view of the light entry surface illustrated in Fig. 3;
Fig. 5 is a view schematically illustrating a case where reflected light incident reducing means is not provided on the periphery of the light entry surface; and
Fig. 6 is an enlarged plane cross-seclional view schematically illustrating a periphery of an light entry surface of a camera according to another embodiment of the present invention.

### DETAILED DESCRIPTION

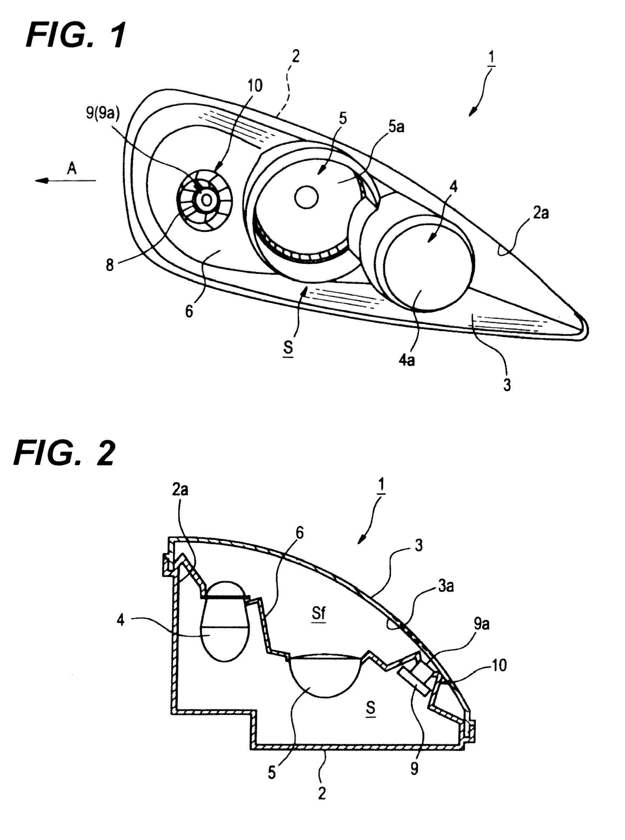

Hereinafter, an embodiment of the present invention will be described with reference to the accompanying drawings. Fig. 1 is a perspective view illustrating an external appearance of a vehicle lamp 1 according to an embodiment of the present invention. The vehicle lamp 1 is used as a right headlamp in a traveling direction of a vehicle. The vehicle lamp 1 includes a lamp housing 2 having an opening portion 2a, and a translucent cover 3 provided to cover the opening portion 2a. A low beam irradiating lamp unit 4 and a high beam irradiating lamp unit 5 are disposed in parallel with each other in a horizontal direction in a lamp chamber S between the lamp housing 2 and the translucent cover 3. Peripheries of the lamp unit 4 and the lamp unit 5 are covered by a partition member 6, and the lamp units 4 and 5 are configured such that only light exit surfaces 4a and 5a are exposed to the translucent cover 3 side.

In addition, the partition member 6 is provided with an opening portion 8 which is located outside the lamp unit 5 (A direction in Fig. 1) in a vehicle width direction. An light entry surface 9a of a camera unit 9 is disposed within the opening portion 8 and is exposed to the translucent cover 3 side. Accordingly, the light entry surface 9a is disposed to be directed toward the outside (A direction in Fig. 1) in the vehicle width direction. An image of a front region, which is imaged by the light entry surface 9a, is provided to a controller (not shown) provided in the vehicle. The image of the front region is provided to a driver and is also used to detect a forward vehicle, a walker, or the like in the controller. Also, in a case where the forward traveling vehicle, the walker, or the like is detected as a processing result of an image signal from the camera unit 9, control of a vehicle traveling state, light distribution control of forward irradiation light, or the like is performed by a control signal from the controller.
In addition, as shown in Fig. 1, the light entry surface 9a in the partition member 6 is surrounded by a reflected light reducing portion 10 to reduce reflected light.

Fig. 2 is a plane cross-sectional view schematically illustrating an inner configuration of the vehicle lamp 1. As shown in Fig. 2, the partition member 6 is located between the translucent cover 3 and the lamp housing 2 and is provided to partition the lamp chamber S. In addition, the partition member 6 is formed such that the reflected light reducing portion 10 protrudes toward an inner surface 3a of the translucent cover 3. For this reason, a clearance between the reflected light reducing portion 10 and the translucent cover 3 can be made small as compared to any other portions of the partition member 6.

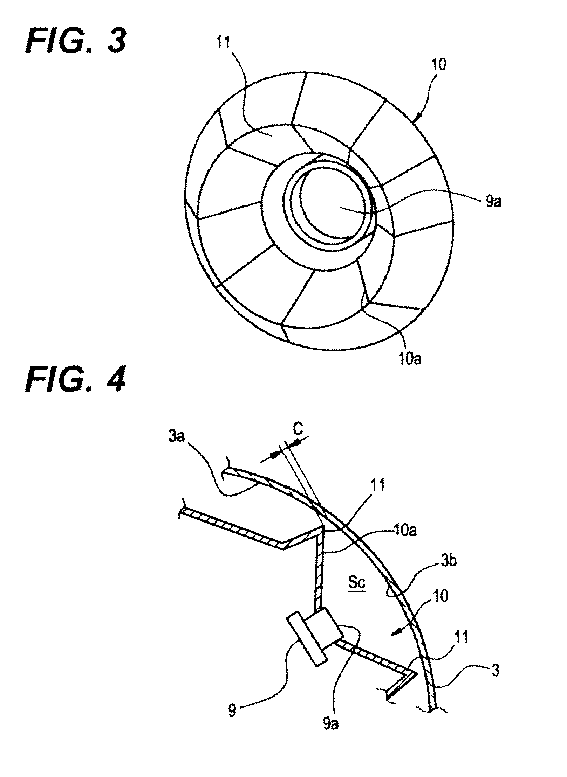

Fig. 3 is an enlarged perspective view illustrating the reflected light reducing portion 10 provided around the light entry surface 9a of the camera unit 9. Fig. 4 is an enlarged plane cross-sectional view illustrating the vicinity of the light entry surface 9a of the camera unit 9.

As shown in Fig. 3, the reflected light reducing portion 10 has a ridge portion 11 protruding toward the translucent cover 3. The ridge portion 11 surrounds the light entry surface 9a of the camera unit 9. Also, a dimension protruding from the ridge portion 11 to the translucent cover 3 is set such that a clearance C between the ridge portion 11 and the inner surface 3a of the translucent cover 3 can be made as small as possible, as shown in Fig. 4. With such a configuration, the ridge portion 11 is configured to partition a region Sc in the vicinity of the light entry surface 9a from regions other than the region Sc in a space Sf (see Fig. 2) formed between the partition member 6 and the translucent cover 3.

In addition, coating for reducing reflectivity of light (e.g., AR coating) is applied on a surface 10a of the reflected light reducing portion 10, which faces the translucent cover 3. Furthermore, an antifog coating is applied on a portion 3b of the inner surface 3a of the translucent cover 3, which faces the light entry surface 9a.

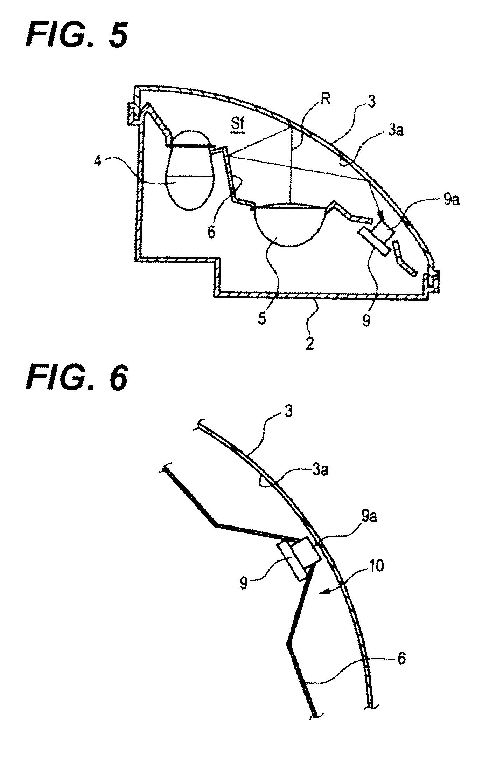

In the vehicle lamp 1 having such a configuration, the ridge portion 11 of the reflected light reducing portion 10 is configured to partition the region Sc in the vicinity of the light entry surface 9a from the other regions of the space Sf between the partition member 6 and the translucent cover 3. A part of light generated from the lamp units 4 and 5 is reflected between the partition member 6 and the inner surface 3a of the translucent cover 3. Therefore, as shown in Fig. 5, in a case where the ridge portion 11 is not provided, there is a possibility that stray light is generated due to incidence of the reflected light R upon the light entry surface 9a of the camera unit 3. A halation is generated on the image which is imaged by the camera unit 9 due to such stray light. Consequently, there is a problem of affecting a detection function of an object (forward traveling vehicle or walker) using the image of the camera unit 9.

In contrast, in the present embodiment, since the reflected light between the partition member 6 and the inner surface 3a of the translucent cover 3 is blocked by the ridge portion 11 of the reflected light reducing portion 10, a possibility that the stray light is generated in the camera unit 9 is decreased. Accordingly, deterioration of the image due to the halation may be prevented, and the detection function of the object using the image may be reliably achieved.

In particular, the ridge portion 11 is provided to surround the light entry surface 9a and protrude toward the translucent cover 3. Furthermore, the clearance C between the ridge portion 11 and the translucent cover 3 is made small as compared to the other portions of the partition member 6. Consequently, the incidence of the reflected light upon the region Sc in the vicinity of the light entry surface 9a may be surely decreased by a simple structure.

In addition, a processing treatment to reduce reflectivity of light is performed on the surface 10a of the reflected light reducing portion 10 between the light entry surface 9a and the ridge portion 11. Therefore, a possibility may also be decreased in which light such as street light, which is incident from the outside through the translucent cover 3, is reflected from the surface 10a and is incident upon the light entry surface 9a. Accordingly, the precision of an image captured by the light entry surface 9a may be further increased, and thus the detection function of the object may be reliably achieved.

In addition, in a case of partitioning the region Sc in the vicinity of such an light entry surface 9a by the ridge portion 11, it is difficult for air in the lamp camber S which is warmed by the lamp units 4 and 5 to circulate in the region Sc. As such, there is a possibility that dew condensation is generated at the portion 3b in the vicinity of the light entry surface 9a in the inner surface 3a of the translucent cover 3. However, in the present embodiment, the befog coating is applied on the portion 3b of the inner surface 3a of the translucent cover 3, which faces the light entry surface 9a. Therefore, generation of the dew condensation can be suppressed, thereby allowing the precision of the imaged image in the light entry surface 9a to be maintained.

Although the embodiment of the present invention has been described as above, the present invention is not limited to the above embodiment. Other configurations may be adopted, if necessary.

For example, in the above embodiment, although coating for reducing reflectivity of light (AR coating) is applied on the surface 10a of the reflected light reducing portion 10, the reflectivity of the surface 10a of the reflected light reducing portion 10 may be reduced by forming grains or knurls in the surface 10a of the reflected light reducing portion 10 instead of formation of the AR coating.

In addition, in the above embodiment, although the region Sc in the vicinity of the light entry surface 9a has been partitioned by provision of the ridge portion 11 in the reflected light reducing portion 10, the present invention is not limited thereto. For example, as shown in Fig. 6, only the reflected light reducing portion 10 may also be provided to protrude toward the inner surface 3a of the translucent cover 3. Even with such a configuration, it is possible to prevent the reflected light between the partition member 6 and the translucent cover 3 from entering the light entry surface 9a.

In addition, in the above embodiment, although the vehicle lamp 1 has been described as the right headlamp in the traveling direction of the vehicle, the present invention is not limited thereto. The vehicle lamp of the present invention may be applied to a left headlamp in the traveling direction of the vehicle by revering the structure shown in Figs. 1 and 2 in a left and right direction. Moreover, the application range of the present invention is not limited to the headlamp. The present invention may be applied to a tail lamp or the other lamps of the vehicle.

In addition to this, other structures and materials may be adopted without departing from the purport of the present invention, and may be selectively utilized.

## Claims

1. A vehicle lamp (1) comprising:
a lamp housing (2) having an opening portion (2a);
a translucent cover (3) covering the opening portion, wherein a lamp chamber (S) is formed by the lamp housing and the translucent cover;
a lamp unit (4, 5) disposed within the lamp chamber and configured to emit light forward;
a camera unit (9) whose light entry surface (9a) faces the translucent cover; and
a partition member (6) configured to partition the lamp chamber and disposed between the translucent cover and the lamp unit to expose a light exit surface of the lamp unit to a first space (Sf), wherein the first space is a space surrounded by the partition member and the translucent cover,
wherein the partition member comprises a partition portion (11) configured to partition a second region (Sc) from portions of the first region (St) other than the second region (Sc), wherein the second region is a region formed between the light entry surface (9a) and translucent cover (3).

2. The vehicle lamp of claim **1,** wherein the partition portion (11) is configured to surround the light entry surface (9a) and protrude toward the translucent cover.

3. The vehicle lamp of claim **1** or **2,** wherein a clearance (C) between the partition portion and the translucent cover is the smallest among clearances between the partition member and the translucent cover.

4. The vehicle lamp of any one of claims **1** to **3,** wherein a reflectivity reducing process for reducing reflectivity of light is performed on a surface (10a) of the partition member (6) which is located between the light entry surface and the partition member.

5. The vehicle lamp of any one of claims **1** to **4,**
wherein a befogging process is performed on a portion of the translucent cover, which faces the region (Sc) between the light entry surface (9a) and the translucent cover (3).
